# EUROPEAN PATENT APPLICATION

(11) **EP 4 756 475 A1**
(43) Date of publication of application: **10.06.2026**
(21) Application number: 24217345.8
(22) Date of filing: 04.12.2024
(51) Int. Cl.: G01S 5/00, H04W 4/02, H04W 64/00, H04W 4/024, H04L 67/12, H04W 4/30, H04W 4/90

(54) **TELECOMMUNICATION DEVICES FOR DATA TRANSFER WITH ISOLATED TARGET DEVICES**

(71) Applicant: Koninklijke Philips N.V., 5656 AE Eindhoven (NL)
(72) Inventor: RAMACHANDRAN, Rathish, Eindhoven (NL)
(74) Representative: Philips Intellectual Property & Standards

(57) **Abstract**

The invention relates to a server device for data transfer with an isolated target device. The server device includes an external communication interface to communicate with a remote server for sending device data and receiving update packets containing target device identification and payload data. A data processor partitions a coverage area into bounded sections, generates a stochastic model of location states and transitions, maps the area, and determines routes for guiding a mobile device to the target device.

The mobile device features a communication interface to receive updates and instructions from the server device and connect to the target device to deliver the update. It also includes a security interface for capturing a user's security feature and a mobile processing unit to authorize the data transfer when identifications match. Also a corresponding method and system are disclosed.

## Description

### FIELD OF THE INVENTION

The present invention relates to data transfer strategies including mobile device routing, specifically to enable data transfer with communicatively isolated medical devices.

### BACKGROUND OF THE INVENTION

Medical technology apparatuses, such as x-ray apparatuses, ultrasound systems, magnetic resonance apparatuses, and others, are increasingly controlled by software which may require continuous maintenance and updates. This is necessitated by various factors, ranging from minor error corrections to critical safety updates.

To perform maintenance tasks, such as retrieving usage data, logging and tracing information, and patient image data, in person access to a medical technology apparatus may be necessary.

Updating the actual configuration of a medical technology apparatus can be straightforward when the apparatus is regularly or permanently connected to the Internet. However, when the apparatus is mobile or non-stationary and lacks Internet connectivity, updating the configuration may require significant effort.

WO 2024062274 A1 discloses a system and method for cloud-based clinical content distribution and messaging. An edge device can mediate between a local information system associated with a local cloud system and a remote cloud system. The edge device can analyze the healthcare information by matching the healthcare information to a first characteristic or a second characteristic. When the healthcare information matches the first characteristic, the edge device uploads the healthcare information to the remote cloud system and allocates a first computing task to the remote cloud system for the healthcare information. When the healthcare information matches the second characteristic, the edge device stores the healthcare information at the local cloud system and allocates a second computing task to the local cloud system for the healthcare information.

### SUMMARY OF THE INVENTION

Radiology systems, including ultrasound machines, catheterization labs, and mobile C-Arms, are essential tools in hospitals for diagnostics and surgical procedures. These systems are often housed in shielded chambers to prevent or at least reduce exposure to radiation. These shielding aspects may however also result in device locations that suffer from poor or non-existent network connectivity, which poses significant challenges for remote diagnostics and software updates.

Radiology systems may operate on a client-server model, which can require network connectivity to exchange data and perform software updates. A lack of continuous connectivity can lead to data synchronization issues with remote servers. Thereto, the physical presence of a technician can be required to manually collect logs and perform updates, which is both time-consuming and costly.

Technicians, respectively field service engineers, may regularly travel to hospitals to perform necessary updates and diagnostics. This travel can be extensive and expensive, especially if the hospital is far from the engineer's location. Additionally, accessing the systems within the hospital may require pre-approval, and emergency cases can further delay the process, leading to an inefficient use of work time and other resources.

Additionally, mobile radiology systems may change their location within the hospital, making it difficult to track and locate them when data exchange, specifically in the form of updates and diagnostics is required. This aspect increases in significance according to the size of the respective facility. Diagnosing and updating these mobile systems may require a skilled technician who is able to interpret system parameters and perform necessary actions, such as software tuning or initiating parts replacement.

Also different versions of radiology systems may be in use, each requiring specific software and/or updates strategies. This can require managing multiple versions of software and varying procedures relating to device diagnostics, increasing the risk of errors and inefficiencies.

These challenges highlight the need for a more efficient and reliable method of maintaining and updating medical systems, specifically radiology systems isolated from wireless connectivity, ensuring they remain up-to-date and functional with minimal disruption.

There may thus be a need to provide means for an efficient data transfer to and from devices without network connectivity.

By implementing an edge computing architecture and mobile device routing leveraging, the invention aims to provide efficient data transfer and update mechanisms for medical technology apparatuses, ensuring reliability and reducing the effort needed for maintenance and updates, particularly in environments with limited connectivity.

The object of the present invention is solved by the subject-matter of the independent claims; further embodiments are incorporated in the dependent claims. It should be noted that the following described aspects of the invention apply also to the mobile device for data transfer with an isolated target device, to the system for data transfer with an isolated target device and to the method for guiding a mobile device within a coverage area to a target device.

According to a first aspect the present disclosure relates to a server device for data transfer with an isolated target device. The server device can comprise an external communication interface, an internal communication interface, and/or a data processor. The external communication interface can be configured to communicate with a remote server for providing device data and/or for receiving an update data packet for a target device. The provided device data can comprise maintenance diagnostic data relating to an operational status of the target device and originating from the target device. The update data packet can comprise a target device identification and/or payload data. Further, the data processor can be configured to partition a coverage area using a boundary model into a plurality of bounded area sections, generate a stochastic model comprising a plurality of location states corresponding to the plurality of bounded area sections and a plurality of state transitions indicating a transition between adjacent location states, map the coverage area according to the determined plurality of bounded area sections and crossings between the bounded area sections to form a cohesive navigable map of the coverage area; and/or determine a route for guiding a mobile device to the target device as a sequence of state transitions for the device to traverse to a location state of the target device by means of the stochastic model.

The internal communication interface can be configured to provide the route and the update data packet to the mobile device, in particular when the mobile device is at the location of the server device. Further, the internal communication interface can be configured to receive device data from the mobile device.

As an effect, the combination of server device and mobile device can realize an intermittent, scheduled, seamless connection with the remote server by moving the mobile device between target device and server device, in particular at a designated time and a designated route to exchange data. This can enable scheduled system diagnostics, in particular a data exchange frequency can be increased to facilitate precise target device management and planning of subsequent actions.

The data processor can be configured to receive and/or to accumulate device data from a mobile device. Additionally the data processor can be configured to transmit the accumulated device data to a remote server, preferably to transmit the device data intermittently. This can achieve the advantage that the server device may not require constant connectivity to the remote server, respectively any target device for the data transmission. Thereto, the data transfer from the server device has an increased tolerance for intervals of limited or non-existent connectivity to the remote server and/or for intervals of receiving data transfers from target devices. Further, accumulating device data can reduce the number of transfers to the remote server and thereby increase transfer efficiency by reducing communication overhead as multiple device data packets from target devices can be bundled in a single communication. The remote server can be configured to provide device data to the remote server based on connectivity to the remote server and/or availability of the remote server.

The data processor can be configured to accumulate a plurality of update data packages. Additionally or alternatively, the data processor can be configured to determine and/or provide a route according to the plurality of update data packages pertaining to a plurality of target devices. Thereto, a route comprising locations of the devices to which the update packages pertain can be determined. As an effect, the plurality of update data packages can be bundled in a single route reducing travel time and increasing the availability of the mobile device at the server device, thereby decreasing a delay between devices data packages being available at the server device and these device data packages being transferred to the mobile device. In other words, route optimization and data bundling decreases travel time, thereby increasing availability of the mobile device at the location of the server device.

The data processor can be configured to minimize a travel characteristic of the route. The travel characteristic can be at least one of number of state transitions, total travel distance, total travel time, and number of routes. As an effect, the route can be preset and can provide an optimized path for the mobile device linking the device locations such that resource usage necessary to transport the update data is minimized are at least reduced, in particular compared to an unmanaged, unscheduled and/or unrouted data distribution.

The server device can be configured to receive mobile device data from the mobile device. The mobile device data can comprise at least one of location states of the mobile device, location transitions of the mobile device and data relating to a communication between the mobile device and the target device. Further, the server device can be configured to determine a location state of the target device according to the mobile device data. As an effect the server device can track the current location state of the mobile device and infer from location states and state transitions when the mobile device reaches the target device. In particular, when the mobile device is no longer in a network coverage area, the transition from its last known location state with network connectivity to a location state with no network connectivity can indicate that the mobile device is at the target device. When the mobile device transitions back into a state with network connectivity, the server device can assume that the data transfer at the target device occurred.

The mobile device can be configured to acknowledge a data transfer at the target device in response to transitioning into a location state with network connectivity, in particular after being in a location state without connectivity.

According to a further aspect the present disclosure relates to a mobile device for data transfer with an isolated target device. The mobile device can comprise a communication interface, a security interface, and/or a mobile processing unit. The security interface can be configured to capture a security feature of a user. The communication interface can be configured to connect to a server device and receive an update data packet and movement instructions from the server device. Additionally or alternatively, the communication interface can be configured to connect to the target device, in particular when the user device transitioned into the location state of the target device. Further, the communication interface can be configured to provide the update data packet to the target device. The mobile device can achieve the advantage that its handling can be decoupled from its functions. Specifically, the data transfer between the mobile device and the target device can be automated such that the person handling the device may not need to have specific knowledge to intervene in the data transfer process. Any interaction between the target device and the mobile device can be coordinated via the remote server.

The mobile processing unit can be configured to compare a device identification of the target device with a device identification of the update data packet, and/or to authorize the communication interface for providing the update data packet, in particular when the security feature is valid and/or the device identification of the target device matches the identification of the update data packet. This can achieve the advantage of secure operation by using a combination of system information, e.g., a target device identification and a personalized security feature, e.g. a biometric feature. Authorized feature combinations can be determined by the remote server. Such that authorized personnel can be matched to specific target devices to be updated. The remote server may know the device identification of the specific target device to be updated and may provide this information to the server device. The server device is aware of the location of the target device and can direct the mobile device, respectively the designated person to the corresponding target device location, e.g., a specific lab.

The mobile device can comprise a motion unit. The motion unit can be configured to autonomously move the mobile device along a route to the target device according to movement instructions, and/or to autonomously move the mobile device to a further destination after providing the update data packet is complete. This as an effect, the mobile device can move autonomously between server device and target device, respectively a plurality of target devices. Specifically, the mobile device can have sensors to capture its surrounding in combination with navigational features configured to navigate the mobile device according to the route between the server device and target device.

The communication interface can be configured to receive device data from the target device, in particular when connected to the target device. The received device data can comprise maintenance diagnostic data relating to an operational status of the target device and originating from the target device. Additionally or alternatively, the communication interface can be configured to provide the device data to the server device, preferably when connected to the server device. More preferably, the communication interface can provide the device data to the server device when the mobile device is connected to the server device via the communication interface and the mobile device is in the location state of the server device. This can achieve the advantage that data transfer between the mobile device and the server device can preferably be carried out when the mobile device is in the vicinity of the server device. Thereto, the server device and mobile device can be present in the same security perimeter, i.e., a perimeter accessibly only by personal authorized to access the server device. Further, communication between the server device and the mobile device can be carried out via a short-range communication link. The short-range communication link can be wired or wireless (e.g., Wi-Fi, NFC, Bluetooth, USB, Ethernet, etc.).

The security feature can comprise a private security key and/or the device identification can comprise a public security key. The mobile device can be configured to connect to the target device, and/or to perform a data exchange with the target device, in particular when a valid combination of private security key and public security key is provided. Thereby, the advantage of implementing an effective access control scheme to restrict target device access and/or mobile device access can be implemented. Additionally, verifying the private security can serve as an access limitation to the mobile device as only authorized personnel may interact with the mobile device. Also, even in the case where the data transfer between target device and mobile device may not require manual intervention, the data transfer may only be authorized when a specific private security key is validated. The mobile device may be moved without authorization, but the data transfer may still require the validation of a specific private security key, in particular a biometric feature of authorized personnel. A target device identification can serve as a public key, specifically in an asymmetric encryption scheme. The target device identification can be bound to the specific target device. The public key may only be available at the specific target device, the server device and/or the remote server. A private security key can be a biometric feature, e.g., a person's fingerprint. The remote server can be configured to determine actions to be done on which target device based on its corresponding target device data analysis. Any data transfer or action originating from the remote server and/or the server device can be keyed to a specific combination of private key and public key. Thereto, a specific person can be tasked with updating, respectively providing the mobile device to a specific target device.

The mobile device can be configured to perform an action in response to receiving and/or recognizing a specific public security key. For example, the mobile device can start up, initiate an update procedure and/or perform a data transfer. Validating the public security key, e.g., the device identification, can be a prerequisite to starting a data exchange between the mobile device and the target device.

According to a further aspect the present disclosure relates to a System for data transfer with an isolated target device. The system can comprise a server device according to any one of the disclosed embodiments, a mobile device according to any one of the disclosed embodiments, a remote server, and/or a target device. The remote server can be configured to connect to the server device via a public network, provide update data packets to the server device, and/or to receive device data from the server device. The received device data can comprise maintenance diagnostic data relating to an operational status of the target device and originating from the target device. The server device can be configured to provide the update data packets locally to the mobile device. The target device can be communicatively isolated from the server device.

According to a further aspect the present disclosure relates to a method for guiding a mobile device within a coverage area to a target device. The method can comprise the steps of partitioning the coverage area, preferably using a boundary model, into a plurality of bounded area sections, generating a stochastic model comprising a plurality of location states corresponding to the plurality of bounded area sections and a plurality of state transitions indicating a crossing between adjacent location states, mapping the coverage area according to the determined plurality of bounded area sections and crossings between the bounded area sections to form a cohesive navigable map of the coverage area, and/or determining a route for guiding the mobile device to the target device as a sequence of state transitions for the device to traverse to a location state of the target device by means of the stochastic model.

In a further embodiment, the step of partitioning the coverage area can comprise the step of receiving location data for a plurality of access devices. Each access device can be configured to provide wireless communication to the mobile device. Further, partitioning can comprise the step of determining a boundary of an area section comprising one access device. The boundaries of adjacent area sections can be non-overlapping. Thereby, discrete unambiguously bounded area sections can be formed. Additionally, partitioning can comprise the step of assigning a unique label to each bounded area section. Thereby, a location state for a device being located in the corresponding bounded area section can be defined.

In a further embodiment, the step partitioning the coverage area can comprise defining a location state according to a wireless signal coverage falling below a predetermined threshold value as an individual no signal location state. Additionally or alternatively, partitioning can comprise adding the no signal location state and/or a corresponding state transition to the stochastic model, in particular according to the corresponding bounded area section to which the no signal location is adjacent to.

The method can comprise the steps of receiving a payload data packet configured for deployment at a target device, providing the payload data packet to the mobile device; and/or generating movement instructions for the mobile device corresponding to the route to deliver the payload data packet to the target device.

The method can comprise the steps of receiving location update data which may indicate a change in location state of the target device. Further, the method can comprise updating a location state of the target device according to the location update data.

Mobile radiology systems can move between different locations, e.g., different examination, storage and/or operating rooms. Moving a target device can happen unscheduled, respectively without prior movement information present at the server device or mobile device. This aspect can be taken into account by the stochastic model as a further constraint. Thereto, the target device can comprise a beacon module, which can be a wireless enabled module configured to broadcast to the location network. The beacon module can be configured to activate when a movement of the target system is detected. The beacon module can be configured to connect to the location network, in particular via access points. The beacon module can be configured to provide a communication comprising the target device location to the server device.

Additionally or alternatively, the server device can be configured to determine the location state of the target device based on a network characteristic of the beacon module, e.g., an IP address. The server device can have a physical location map which maps a building structure or compound structure to network signals according to positions of access points of the location network. Thereto, the server device can be configured to determine a location of the target device based on the information which access point receives the signal from the beacon module, respectively to which access point the beacon module is connected to. The server device can be configured to determine the movement, preferably the end location of the target device once the movement is completed. Thereto, the server device can be configured to determine the end location according to the location states the target device traverses, respectively the captured location state transitions of the target device. The server device can be configured to adjust its database according to the final location of the target device.

The beacon module can be configured to be permanently enabled and can be configured to continuously check for network availability. Further, the beacon module can be configured to send a communication, preferably recurring communications in predetermined time intervals, to the server device when network connectivity is available. Thereto, the server device can be configured to determine a most recent location of the target device.

Thus, the method, respectively, the corresponding system can achieve the advantage of automatically tracking the location of target devices. Specifically, also when a target device enters a location state defined by no network connectivity. The employed stochastic model can comprise unambiguous location states and corresponding state transitions such that when the target device transitions from a specific location state with network connectivity to an adjacent location state with no network connectivity, the server device can determine the specific structure, i.e., room, the target device is located in. Any aspect relating to routing or tracking of the mobile device can equally apply to routing or tracking the target device.

Generating the stochastic model can comprise the step of defining a plurality of location states. Each location state of the plurality of location states can be configured to identify a mobile device as being located in one of the bounded area sections. Further, generating the stochastic model can comprise the step of determining a spatial adjacency of two bounded area sections, preferably according to the model detecting a state transition of the mobile device indicating a position change from a first bounded area section of the two bounded area sections to a second bounded area section of the two bounded area sections. Also, generating the stochastic model can comprise the step of defining a state transition as the mobile device crossing a section boundary between location states, in particular a section boundary corresponding to adjacent bounded area sections.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a system for data transfer with an isolated target device according to an embodiment of the invention.
Fig. 2 shows basic steps of a method for guiding a mobile device to a target device.
Fig. 3 shows basic steps of a method for operating a server device according to an embodiment of the present invention.
Fig. 4 shows basic steps of a method 40 for operating a mobile device according to an embodiment of the present invention.
Fig. 5 shows basic steps of a further method 50 for operating a mobile device according to an embodiment of the present invention.
Fig. 6 schematically depicts partitioning the coverage area according to an embodiment of the invention.
Fig. 7 shows an example section of state transitions of a stochastic model according to an embodiment of the invention.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

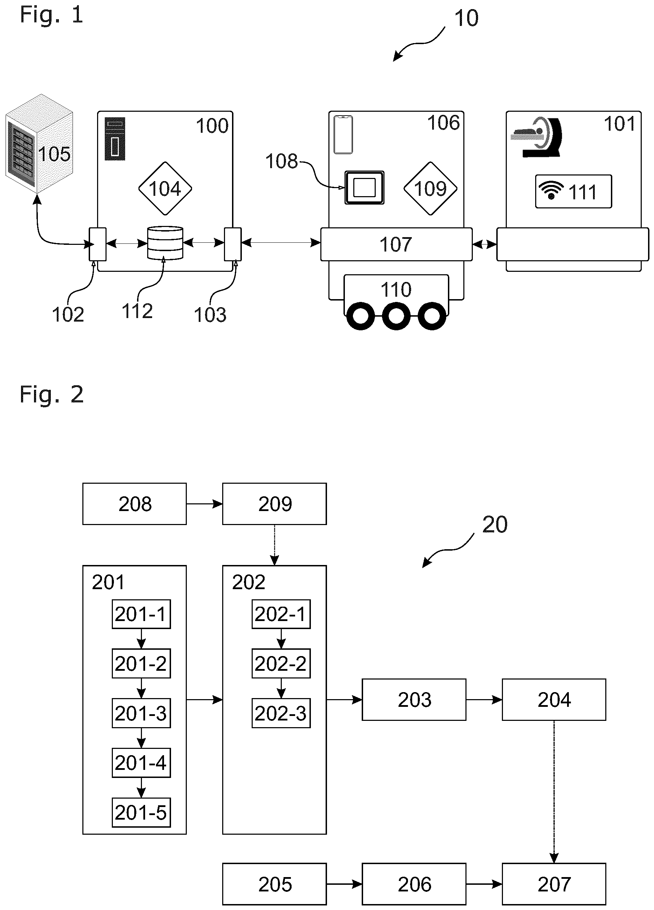

Fig. 1 schematically shows a system for data transfer with an isolated target device, comprising according to an embodiment of the present invention. The system comprises a server device, a mobile device, a remote server and a target device.

In an example, the remote server is configured to connect to the server device via a public network, provide update data packets to the server device, and/or receive device data from the server device. In an example, the server device is configured to provide the update data packets locally to the mobile device. Further, in an example, the target device is communicatively isolated from the server device.

An update data packet can comprise system software and/or firmware relating to a specific target device. Thereto, the update data packet can comprise manufacturer issued data configured to alter a system configuration of the target device. The update data packet can be configured to modify operational capabilities of the target device when applied to, respectively provided to the target device, such as adding functions, applying patches, correcting errors, updating system software / firmware, etc.

The system provides the advantage that data transfer from and to the target device can be performed without the presence of a technician to access the target device. Data transfer, i.e., target device diagnostics, software upgrade, software update, transfer of device data, can be performed automatically according to the target data present on the mobile device.

The route can comprise a scheduling component such that moving the mobile device can be adjusted to a facility schedule, e.g., off-hours of a hospital, respectively device usage schedules. Thereto, the server device, respectively its data processor can be configured to schedule a route of the mobile device according to available scheduling data such that a corresponding target device can be pre-booked for a transfer, e.g., a device software upgrade.

The term coverage area can relate to an area where a wireless signal, such as a Wi-Fi-signal or cellular signal, is available. This area can be determined by the range of the transmitting devices (e.g., access points) and can be influenced by factors like physical obstructions, signal strength, and interference. The area can be defined by a closed -loop boundary delimiting a spatial zone within which a particular service or signal, e.g., set by a minimum signal strength, is provided.

The term boundary model can refer to a system designed to delineate distinct zones, each of which can be defined as being exclusively covered by a single transmitting device. These zones can preferably be unambiguously defined as non-overlapping. This can ensure clear and precise coverage area definition for each transmitting device.

The term bounded area section can refer to an area delimited by a closed-loop boundary, preferably defining a bounding box. Adjacent bounded area sections can be defined such that they do not intersect, ensuring that no two sections overlap.

The term partitioning can refer to defining discrete, in particular non-overlapping sections. The process of partitioning can comprise collecting data on the coverage areas of each wireless access point, applying a partitioning algorithm (e.g., Voronoi) to the collected data to generate initial cells, each corresponding to a coverage area of a single wireless access point, adjusting the boundaries of the initial cells to ensure that each cell is non-overlapping and exclusively covered by one wireless access point, repartitioning the initial cells as necessary to account for obstacles or other environmental factors that may affect coverage, ensuring that each resulting section remains discrete and non-overlapping, and/or validating the final partitioned sections to confirm that they are mutually exclusive and fully cover the area without any gaps or overlaps.

The term stochastic model can relate to a system or process that incorporates randomness and unpredictability. In the context of indoor navigation, a stochastic model, particularly a Markov chain, may be used to predict the movement of a mobile device within a building. Each state may represent a specific location, and transitions between states can be based on the likelihood of moving from one location to another.

The term location state can relate to a specific, bounded area in particular within a building, such as a room and/or a section of a hallway. Each location state can be uniquely labelled and can correspond to a distinct area where a device can be located, aiding in accurate tracking and guidance within the building.

The term state transition can relate to the process of moving from one location state to another, such as moving from one room to an adjacent hallway. In a Markov chain, these transitions are probabilistic and can indicate the likelihood of moving between different areas within the building, which is crucial for mapping routes and understanding movement patterns.

The term route can relate to a planned sequence of state transitions that a mobile device follows to reach a specific destination within the building. This can facilitate providing clear and efficient navigation instructions, such as guiding a device from the entrance of a shopping mall to a particular store.

The term location data can relate to the actual positional information of devices within the building. This data can be collected from access points or sensors and can facilitate determining the boundaries of different area sections and tracking movement within the building. The access points or sensors can be configured to provide wireless communication.

The term no signal location state can relate to an area within the building, specifically a shielded room, e.g., a lab or examination room, where the wireless signal falls below a certain threshold, indicating that the device cannot receive a signal. This state can enable navigation is continuous even through areas where connectivity is lost, ensuring the system can handle these scenarios.

Preferably, the server device can be an edge server which can be positioned in a peripheral or edge position with respect to a network topology. The edge server can be positioned close to endpoint devices, e.g., instances having outside network connectivity. The edge server can be designed to deliver content and services with lower latency compared to traditional centralized or remote servers.

In particular in the context of hospitals servers can be used to process and store data locally. This can be particularly useful for medical monitoring or diagnostic equipment, which can generate large amounts of data that need to be processed quickly. Additionally, an edge server can optimize network performance by distributing processing tasks across multiple points in a network, caching data packets and/or scheduling transfers to balance network load. The edge server can reduce the physical distance data needs to travel, enhancing real-time response rates.

In an option of the example of Fig. 1, the server device 100 can be configured to establish a connection to is connected to a remote server 105, preferably a cloud computing instance. The server device 100 can be a stationary device having a permanent position with respect to the location network, specifically the wireless location network. The server device 100 can be configured to check for data and/or software changes pertaining to target device 101s at the location at the remote server 105. In response to the availability of new data and/or software the server device 100 can be configured to transfer this data from the remote server 105 to a local storage of the server device 100. Also, the server device 100 can be configured to upload data from target device 101s at the location to the remote server 105.

As a further option, the external communication interface 102 and the internal communication interface 103 can be configured to be communicatively decoupled, in particular communicatively isolated from one another. As an effect, the sensitive on sight network infrastructure can be decoupled from outside network access. The server device 100 may handle data transfers without direct network connection between on location devices and the external network. The server device 100 can be configured to handle all outside network communication, in particular relating to data transfers to and from target device 101s. Thereto, the server device 100 may control data transfers from the remote server 105 to a local storage 112 of the server device 100 and data transfers from the mobile device 106 to the local storage 112, which subsequently can be sent from the local storage 112 to the remote server 105.

The server device 100 can be configured to capture a state transition when the mobile device 106 crosses between adjacent bounded area sections. This can achieve the advantage that no direct communication relating to location and status needs to occur between mobile device 106 and server device 100. The server device 100 can infer the location of the mobile device 106 simply by tracking the network parameters of the mobile device 106, e.g., to which access point the mobile device 106 is connected to.

The data processor 104 can be configured to determine a location state of the server device 100 and provide the server location state as an initial starting location state of the route provided to the mobile device 106. As an effect, the mobile device 106 can autonomously navigate from its known starting location to the location of the target device 101.

The data processor 104 can be configured to track the mobile device 106 position according to the current location state of the mobile device 106 and captured state transitions of the mobile device 106. As an effect, the server device 100 can monitor the route and/or route progress of the mobile device 106. The route can be defined as a simple sequence of location states and/or state transitions. The server device 100 can be configured to provide a notification and/or a correction measures to the mobile device 106 in response to the mobile device 106 deviating from the intended route. This can achieve the advantage that the mobile device 106 can be rerouted, e.g., follow a detour when a subsequent state transition is not possible. For example, the route can comprise a location state that may be inaccessible to the mobile device 106 when the route is executed. The server device 100 can be configured to recognize an impasse when a predetermined time interval of the mobile device 106 remaining in a location state, which should be a transitory state, is exceeded.

In an additional option, the server device 100 is configured to check periodically whether update data packages are available at the remote server 105, and/or to cache any available update data packages locally. Further, the server device 100 may also cache the corresponding system identification, respectively the public security key. An update data package can comprise software patches, test images, system patches, etc. This can achieve the advantage that device data can be provided to the target device 101 independently from availability of the remote server 105, respectively a connection to the remote server 105.

In a further example, the server device 100 can be configured to upload device data from the target device 101 received via the mobile device 106 to the remote server 105. The device data can comprise machine generated data, e.g., system logs, images for predictive analytics tasks, etc. Device data can be generated by the target device 101, transported by the mobile device 106 to the server device 100, and/or provided to the remote server 105 by the server device 100. Device data can comprise any data intended for external use from the target device, in particular data for remote analysis and/or diagnostics.

The types of data that can be transferred as part of the device data may include imaging data, patient data, device metadata, operational data and/or maintenance diagnostic data.

Imaging data may consist of raw and/or processed images generated by the target device, which can be used for diagnostic purposes, allowing medical professionals to analyze and interpret the images.

Patient data may include information such as a patient identification and/or other patient characteristics, e.g., name, age, gender, medical history.

Device metadata may include information about the device settings used during a scan, such as scan parameters, calibration data, and/or device status logs, which can be used for quality control, troubleshooting, and/or ensuring optimal scan conditions.

Operational data can include data related to the operation of the target device, such as usage statistics, error logs, and performance metrics, which help in monitoring the device's performance, scheduling maintenance, and improving operational efficiency. In particular, the operational data can relate to respectively include system software and/or firmware.

The device data can comprise a specific combination of data elements defined as maintenance diagnostic data, which can be data relating to maintenance and servicing of the target device. Maintenance diagnostic data may include elements of the operational data, sample scan data and/or calibration information, utilized for monitoring, maintaining, and servicing the target device to ensure optimal operation and prevent failures. Sample scan data can be imaging data suitable to analyze the operational and performance status of the target device, specifically from a technical viewpoint. In other words, the sample scan data can comprise test images or sample patient scans providing an example of the scan and/or imaging characteristics of the target device. In another example, the server device 100 can be configured to periodically monitor whether the mobile device 106 is available. Specifically, the server device 100 can be configured to detect when the mobile device 106 is located in its vicinity, e.g., based on short range wireless communication and/or the mobile device 106 activating a location trigger indicating its position at the location of the server device 100 to the server device 100. In response to detecting the mobile device 106 at the location of the server device 100, the server device 100 can be configured to transfer available update data packages to the mobile device 106 and download device data, i.e., data fetched from target device 101s to the local storage of the server device 100. Additionally or alternatively, the server device 100 may directly upload the device data to the remote server 105.

Thereto, the server device 100 can be configured to automatically connect to the mobile device 106 when the mobile device 106 is in the vicinity of the server device 100, e.g., the mobile device 106 is in the same location state as the server device 100. Correspondingly, the mobile device 106 can be configured to connect to the server device 100 in response to transitioning to the location state of the server device 100. The mobile device 106 can further be configured to provide a notification in response to a completion of a data transfer between the server device 100 and the mobile device 106. The notification can indicate that the mobile device 106 is ready to transfer to a target device 101. Preferably, the mobile device 106 is configured to return to the location state of the server device 100 after completion of the data transfer at the target device 101. The mobile device 106 can have a default location at the server device 100 such that each route of the mobile device 106 originates at the default location.

Also in an example, the server device 100 can be configured to process device data before uploading the device data to the remote server 105.

In an example, the mobile device 106 can comprise a general user interface accessible to any unskilled designated person.

In a further example, the mobile device 106 can be configured to fetch system information data (e.g., battery health, temperature, coolant status, image quality etc.), and execute device analysis. The device analysis can be pre-defined and/or rule-based. This achieves the advantage that no manual interaction is necessary in retrieving the system information data from the target device 101.

According to a further example, the mobile device 106 can be configured to display the status of the target device 101, preferably on a display device integrated in the mobile device 106. Additionally or alternatively, the mobile device 106 can be configured to send the system information data to the remote server 105 when the mobile device 106 is connected to the server device 100.

Also in an example, the mobile device 106 can be configured to provide the location state, respectively any other data relating to the location of the target device 101 to the server device 100.

The mobile device 106 may be brought into contact with the target device 101 without the mobile device 106 being aware of its location and/or the location of the target device 101. For example, when automatic routing of the mobile device 106 to the target device 101 fails, the mobile device 106 can be placed manually in the vicinity of the target device 101 to initiate a data transfer. The target device 101 location may not have network connectivity such that the mobile device 106 may not be able to determine its location state, respectively its location within the facility.

Thereto, the mobile device 106 can be configured to receive location information from the target device 101, e.g., its location state, its latest state transition, its last location state with network connectivity, and/or any map based location information. As an effect, the mobile device 106 may determine its location when transitioning from the location of the target device 101 to a location state with network connectivity. The mobile device 106 and/or the server device 100 can be configured to adjust a remaining route according to an updated location state of the mobile device 106 according to the location information of the target device 101.

When manual routing of the mobile device 106 from the server device 100 to the target device 101 is performed, the mobile device 106 may receive location information relating to the target device 101 from the server device 100. The mobile device 106 can be configured to display the location information and/or routing information according to the location information on the display unit of the mobile device 106. As an effect, personnel handling the mobile device 106 can be provided with information facilitating in manually locating the target device 101.

The mobile device 106 can comprise a communication interface 107, a security interface 108 and a mobile processing unit 109. The security interface 108 can be configured to capture a security feature of a user. The communication interface 107 can be configured to connect to a server device 100 and receive an update data packet and movement instructions from the server device 100. The communication interface 107 can further be configured to connect to the target device 101 when the user device 106 transitioned into the location state of the target device 101. The security feature can be used as a means to authorize access to the mobile device 106. Additionally the combination of security feature and device identification of the target device can form a key pair to which the corresponding update data package is linked. Consequently, the mobile device may only initiate the transfer of the update data packet to the target device when matching security feature and device identification are captured.

The mobile device 106 can be configured to limit the process of exchanging data with the server device 100 to the location state of the server device 100. As an effect, the mobile device 106 needs to be placed near the server device 100 to allow data transfer from and to the server device 100.

The target device 101 can comprise a beacon module 111, which can be a wireless enabled module configured to broadcast to the location network. The beacon module 111 can be configured to activate when a movement of the target device 101 is detected. The beacon module 111 can be configured to connect to the location network, in particular via access points. The beacon module 111 can be configured to provide a communication comprising the target device 101 location to the server device 100.

Fig. 2 schematically shows a method 20 for guiding a mobile device, in particular within a coverage area to a target device.

The method can comprise partitioning 201 the coverage area into a plurality of bounded area sections, generating 202 a stochastic model, mapping 203 the coverage area according to the stochastic model, and determining 204 a route for guiding the mobile device to the target device as a sequence of state transitions for the device to traverse to a location state of the target device by means of the stochastic model.

The stochastic model can comprise a plurality of location states corresponding to the plurality of bounded area sections and a plurality of state transitions indicating a crossing between adjacent location states. The plurality of bounded area sections and crossings between the bounded area sections can form a cohesive navigable map of the coverage area.

In an example, the step of partitioning 201 the coverage area can comprise the step of receiving 201-1 location data for a plurality of access devices. Each access device can be configured to provide wireless communication to the mobile device. Further, partitioning 201 can comprise the step of determining 201-2 a boundary of an area section comprising one access device. The boundaries of adjacent area sections can be non-overlapping. Thereby, discrete unambiguously bounded area sections can be formed. Additionally, partitioning 201 can comprise the step of assigning 201-3 a unique label to each bounded area section. Thereby, a location state for a device being located in the corresponding bounded area section can be defined.

Adjacent bounded area sections of the plurality of area sections can be configured to be mutually exclusive.

A location state of the stochastic model assigned to the target device comprised in the route can correspond to the location of the target device.

A final state transition can correspond to the mobile device transitioning to a no signal location state.

In an example, partitioning 201 the coverage area can further comprise defining 201-4 a location state according to a wireless signal coverage falling below a predetermined threshold value as an individual no signal location state, e.g., shielded laboratory, and adding 201-5 the no signal location state and a corresponding state transition to the stochastic model according to the corresponding bounded area section to which the no signal location is adjacent to.

In a further example, the method 20 can comprise receiving 205 a payload data packet configured for deployment at a target device, providing 206 the payload data packet to the mobile device, and generating 207 movement instructions for the mobile device corresponding to the route to deliver the payload data packet to the target device.

The steps of partitioning the coverage area, generating the stochastic model and mapping the coverage area can advantageously performed once as an initial measure to establish a functional routing system for the specific location. The steps can be repeated upon infrastructure changes. Infrastructure changes can relate to changes in network topology, e.g., added access points and/or reconfigurations of the location, e.g., renovation, added rooms, buildings etc. Such a remapping or model adjustment can be performed periodically and/or event based.

In an example, the method can comprise receiving 208 location update data indicating a change in location state of the target device; and updating 209 a location state of the target device according to the location update data. Thereto, the stochastic model can be updated based on the location update.

Each routing of the mobile device, i.e., generating a route can be based on the created model, respectively location mapping. A route can comprise a set of location states to traverse. Additionally or alternatively, a route can be defined based on location state transitions.

In an example, generating 202 the stochastic model can comprise defining 202-1 a plurality of location states. Each location state of the plurality of location states can be configured to identify a mobile device as being located in one of the bounded area sections. Further, generating 202 the stochastic model can comprise determining 202-2 a spatial adjacency of two bounded area sections according to the model detecting a state transition of the mobile device indicating a position change from a first bounded area section of the two bounded area sections to a second bounded area section of the two bounded area sections, and defining 202-3 a state transition as the mobile device crossing a section boundary between location states corresponding to adjacent bounded area sections.

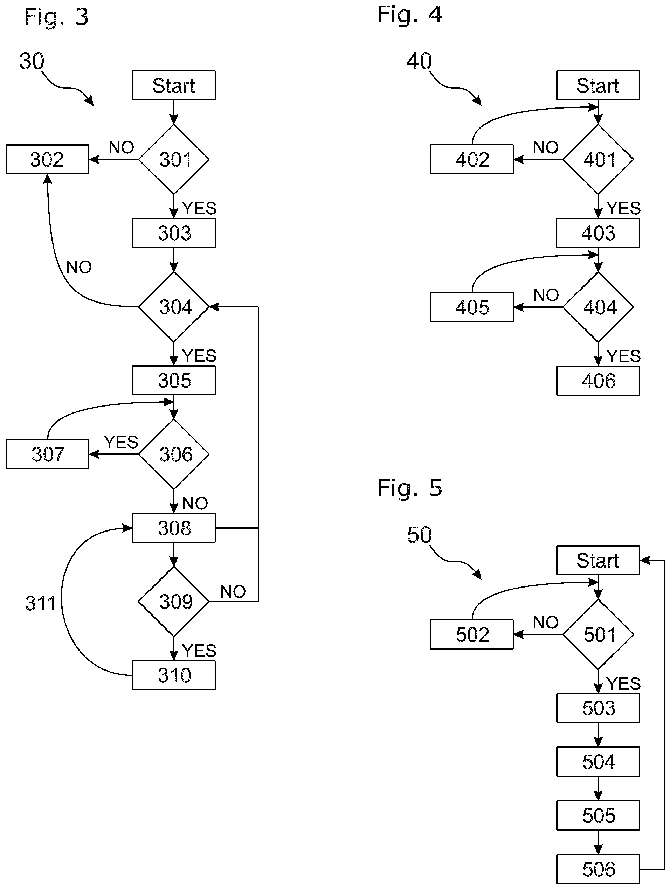

Fig. 3 schematically shows a method 30 for operating a server device according to an embodiment of the present invention.

As an initial measure the step of checking 301 if a new update data packet is available at the remote server can be performed. When no update data packet is available, the server device may wait 302 for a predetermined time interval before again checking for updates. In case an update data packet is available, the server device can proceed to retrieve 303 the update data packet from the remote server to a local update storage. Once the update data packet is available locally at the server device, the server device may query 304 whether the mobile device is available at the server device. If the mobile device is not available, the server device may revert back to waiting 302 for the device and/or for additional updates. When the mobile device is available, specifically locally available to the server device, the server device can connect 305 to the mobile device. Preferably, the connection to the mobile device can be performed automatically via a wireless communication interface, e.g., the internal communication interface of the server device. After establishing a connection, the server device may query 306 if any new device data is available at the mobile device. If yes, the server device may retrieve 307 the device data for a later transmission to the remote server via the external communication interface of the server device. When no device data is present at the mobile device, the server may proceed with copying 308 the update data packet to the mobile device.

Prior to routing the mobile device to the target device, the server device checks 309 whether a position of a beacon module of the target device for which the update data packet is intended is available, respectively was previously captured. The server device may not provide a route to the mobile device, when no position for the target device is recorded in the system. The method can comprise retrieving 310 an access point address to which the target device is connected to or was lastly connected to. This information can be comprised in a message from the beacon module to the server device. Further, the method can comprise determining a geometric router position, i.e. a spatial position at the location, respectively within the compound based on the access point address. The server device can be configured to link the access point address to a spatial position of the location. The model can be updated 311 according to the retrieved location information.

Fig. 4 schematically shows a method 40 for operating a mobile device according to an embodiment of the present invention.

At the start of the process, the mobile device is preferably at its default location, e.g., in the vicinity of the server device and/or connected to the server device. As an initial measure the step of determining 401 if the mobile device comprises an update data packet. Specifically an update data packet that has not yet been delivered to the target device. If no update data packet is present, this check can be repeated 402 periodically. The mobile device with the update data packet can be moved 403 to the lab. Thereto, the server device may provide a route. The mobile device can be manually moved or can move to its destination autonomously.

Further, the method can comprise determining 404 if the target location is reached. If the target location is not yet reached the method can comprise providing 405 routing information and/or target location information to a user, in particular via a display module of the mobile device. Initiating the connection between mobile device and target device can be proximity based. Thereto, the mobile device and target device can establish 406 a connection when a proximity threshold is reached.

Fig. 5 schematically shows a further method 50 for operating a mobile device according to an embodiment of the present invention.

The method can describe the operational process and interactions between a mobile device and a target device. As an initial measure the method 50 can comprise determining 501 if the target device is connected to the mobile device. If no connection is established the step of moving 502 the mobile device to the location of the target device can be performed. When a connection is determined, the step of retrieving 503 system information can be performed. Specifically, the target device can acquire system information from the target device to determine the system identification and/or other operational parameters of the target device. Preferably, the system identification as a public security key can be determined. When a data transfer can be authorized the step of gathering 504 device data can be executed. For example, data available locally at the target device can be transferred to the mobile device. Additionally or alternatively, any update data packet present at the mobile device can be transferred 505 and/or installed at the target device. In an example, the update data packet can be delivered prior to retrieving device data. Upon completion of the data transfer, the next step of moving 506 the mobile device back to the server device or to its subsequent destination, i.e., another target device can be performed.

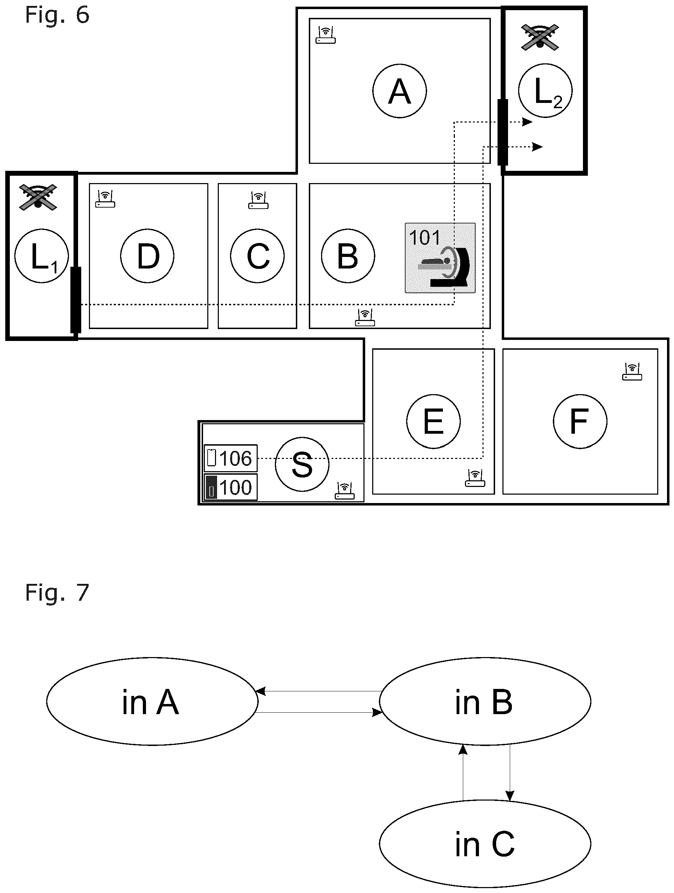

Fig. 6 schematically depicts partitioning the coverage area according to an embodiment of the invention.

Partitioning the coverage area can comprise receiving location data for a plurality of access devices. Each access device can be configured to provide wireless communication to the mobile device and/or the target device 101. Further, partitioning can comprise the step of determining a boundary of an area section comprising one access device. For example, a compound having a specific spatial structure can comprise a plurality of access devices each covering a specific area. In the shown example each uniquely labelled segment A to F, S, L₁ and L₂ comprises an access device providing wireless coverage for the respective segment. The boundaries of adjacent area sections can be non-overlapping. Thereby, discrete unambiguously bounded area sections can be formed. A location state for a device can be defined as the device being connected to the specific access device. The model can differentiate between the location states according to their respective label.

In the shown example, the target device 101 moved from the laboratory 1 to laboratory 2. Laboratory 1 is assigned the location state L₁ which is defined by having no signal coverage and the state transition from D to a state of no signal. Laboratory 2 is assigned the location state L₂ which is defined by having no signal coverage and the state transition from A to a state of no signal. The server device can update its location information relating to the target device 101 moving from L₁ to L₂. Specifically, the server device may receive messages from the beacon module providing information relating to a network characteristic, e.g., the access module the beacon module is connected to. Additionally or alternatively, the server device can query and/or receive connection data relating to the beacon module from the plurality of access devices. The server device 100 can be configured to track the location states and/or state transitions of the target device 101. For example, the server device can track the sequency L₁ > D > C > B > A > L₂. Thus, the location of the target device 101 within the model can be updated to L₂. Thereto, a route for the mobile device 106 to deliver an update data packet can be S > E > B > A > L₂.

The method can comprise capturing the presence of a respective access device and determining its corresponding bounding box and provide these aspects as inputs to the stochastic model, specifically the Markov model. The model may output a corresponding label. The state transition model can be generated based on the connections between the bounding boxes.

The stochastic model can be a Markov chain based on the bounding boxes into which the coverage area is segmented. The model can predict and plan movement within the structure defined by spatial constraints and network coverage. Each state may represent a specific location, and transitions between states can be based on the likelihood of moving from one location to another.
Fig. 7 shows an example section of state transitions of the model. Thereto, the following state transition matrix can be generated:

| State Transition Matrix | Object in A | Object in B | Object in C |
|---|---|---|---|
| Object in A | 0.3 | 0.7 | 0.0 |
| Object in B | 0.1 | 0.3 | 0.5 |
| Object in C | 0.0 | 0.1 | 0.2 |

The server device can be configured to compute the current location of the target device and/or the mobile device from a generated state sequence. Herein, the current location of a device can be determined according to the highest probability state transition according to the captured data.

The term "subject" may also be referred to as individual. The "subject" may further also be referred to as patient, although it is noted that this term does not indicate whether any illness or disease is actually present with the subject.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit or be distributed over more than one computer units, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

As discussed above, the processing unit, for instance a controller implements the control method. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

This exemplary embodiment of the invention covers both, a computer program that right from the beginning uses the invention and a computer program that by means of an update turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section. A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A server device (100) for data transfer with an isolated target device (101), comprising:
an external communication interface (102);
an internal communication interface (103);
a data processor (104);
wherein the external communication interface (102) is configured to communicate with a remote server (105) for providing device data and for receiving an update data packet for the target device (101), wherein the update data packet comprises a target device identification and payload data;
wherein the data processor (104) is configured to:
partition a coverage area using a boundary model into a plurality of bounded area sections;
generate a stochastic model comprising a plurality of location states corresponding to the plurality of bounded area sections and a plurality of state transitions indicating a transition between adjacent location states;
map the coverage area according to the determined plurality of bounded area sections and crossings between the bounded area sections to form a cohesive navigable map of the coverage area; and
determine a route for guiding a mobile device (106) to the target device (101) as a sequence of state transitions for the mobile device (106) to traverse to a location state of the target device (101) by means of the stochastic model;
wherein the internal communication interface (103) is configured to:
provide the route and the update data packet to the mobile device (106); and
receive device data from the mobile device, and
wherein the device data comprises maintenance diagnostic data relating to an operational status of the target device (101) and originating from the target device (101).

2. The server device (100) according to claim 0, wherein the data processor (104) is configured to:
receive and accumulate device data from the mobile device (106);
transmit the accumulated device data to the remote server (105);
accumulate a plurality of update data packages; and
determine and provide a route according to the plurality of update data packages pertaining to a plurality of target devices.

3. The server device (100) according to any one of the preceding claims, wherein the data processor is configured to:
minimize a travel characteristic of the route, wherein the travel characteristic is at least one of number of state transitions, total travel distance, total travel time, number of routes.

4. The server device (100) according to any one of the preceding claims configured to:
receive mobile device data from the mobile device (106), wherein the mobile device data comprises at least one of location states of the mobile device (106), location transitions of the mobile device (106) and data relating to a communication between the mobile device (106) and the target device (101);
determine a location state of the target device (101) according to the mobile device data.

5. A mobile device (106) for data transfer with an isolated target device (101), comprising:
a communication interface (107);
a security interface (108);
a mobile processing unit (109);
wherein the security interface (108) is configured to capture a security feature of a user;
wherein the communication interface (107) is configured to:
connect to a server device (100) and receive an update data packet and movement instructions from the server device (100);
connect to the target device (101) when the mobile device (106) transitioned into the location state of the target device (101);
provide the update data packet to the target device (101);
and wherein the mobile processing unit (109) is configured to:
compare a device identification of the target device (101) with a device identification of the update data packet; and
authorize the communication interface (107) for providing the update data packet when the security feature is valid and the device identification of the target device (101) matches the identification of the update data packet.

6. The mobile device (106) according to claim 5, comprising:
a motion unit (110) configured to:
autonomously move the mobile device (106) along a route to the target device (101) according to movement instructions; and
autonomously move the mobile device (106) to a further destination after providing the update data packet is complete.

7. The mobile device (106) according to any one of claims 5 and 6, wherein the communication interface (107) is further configured to:
receive device data from the target device (101) when connected to the target device (101);
provide the device data to the server device (100) when connected to the server device (100), and
wherein the device data comprises maintenance diagnostic data relating to an operational status of the target device (101) and originating from the target device (101).

8. The mobile device (106) according to any one of claims 5 to 7,
wherein the security feature comprises a private security key and the device identification comprises a public security key; and
wherein the mobile device (106) is configured to connect to the target device (101) and perform a data exchange with the target device (101) when a valid combination of private security key and public security key is provided.

9. A system (10) for data transfer with an isolated target device (101), comprising:
a server device (100) according to any one of claims 0 to 0;
a mobile device (106) according to any one of claims 0 to 0:
a remote server (105);
- a target device (101);
wherein the remote server (105) is configured to:
connect to the server device (100) via a public network;
provide update data packets to the server device (100);
receive device data from the server device (100);
wherein the server device (100) is configured to provide the update data packets locally to the mobile device (106);
wherein the target device (101) is communicatively isolated from the server device (100), and wherein the device data comprises maintenance diagnostic data relating to an operational status of the target device (101) and originating from the target device (101).

10. A method (20) for guiding a mobile device to a target device (101), comprising the following steps:
partitioning (201) the coverage area using a boundary model into a plurality of bounded area sections; and
generating a (202) stochastic model comprising a plurality of location states corresponding to the plurality of bounded area sections and a plurality of state transitions indicating a crossing between adjacent location states;
mapping (203) the coverage area according to the determined plurality of bounded area sections and crossings between the bounded area sections to form a cohesive navigable map of the coverage area; and
determining (204) a route for guiding the mobile device (106) to the target device (101) as a sequence of state transitions for the device to traverse to a location state of the target device (101) by means of the stochastic model.

11. The method (20) according to claim 10, wherein partitioning (201) the coverage area comprises:
receiving (201-1) location data for a plurality of access devices each providing wireless communication to the mobile device;
determining (201-2) a boundary of an area section comprising one access device, wherein the boundaries of adjacent area sections are non-overlapping to form discrete unambiguously bounded area sections; and
assigning (201-3) a unique label to each bounded area section to define a location state for a device being located in the corresponding bounded area section.

12. The method (20) according to any one of claims 0 and **Error! Reference source not found.,** wherein partitioning (201) the coverage area comprises:
defining (201-4) a location state according to a wireless signal coverage falling below a predetermined threshold value as an individual no signal location state; and
adding (201-5) the no signal location state and a corresponding state transition to the stochastic model according to the corresponding bounded area section to which the no signal location is adjacent to.

13. The method (20) according to any one of the preceding claims 10 to 12 comprising the steps of:
receiving (205) a payload data packet configured for deployment at a target device (101);
providing (206) the payload data packet to the mobile device; and
generating (207) movement instructions for the mobile device corresponding to the route to deliver the payload data packet to the target device (101).

14. The method (20) according to any one of the preceding claims comprising the steps of:
receiving (208) location update data indicating a change in location state of the target device (101); and
updating (209) a location state of the target device (101) according to the location update data.

15. The method (20) according to any one of the preceding claims 10 to 14, wherein generating (202) the stochastic model comprises the steps of:
defining (202-1) a plurality of location states, wherein each location state of the plurality of location states is configured to identify the mobile device (106) as being located in one of the bounded area sections;
determining (202-2) a spatial adjacency of two bounded area sections according to the model detecting a state transition of the mobile device (106) indicating a position change from a first bounded area section of the two bounded area sections to a second bounded area section of the two bounded area sections; and
defining (202-3) a state transition as the mobile device (106) crossing a section boundary between location states corresponding to adjacent bounded area sections.
